# EUROPEAN PATENT APPLICATION

(11) **EP 1 850 552 A1**
(43) Date of publication of application: **31.10.2007**
(21) Application number: 06290673.0
(22) Date of filing: 24.04.2006
(51) Int. Cl.: H04L 29/06

(54) **Method of handling XML messages in intermediate networks or intermediate network segments**

(71) Applicant: Alcatel Lucent, 75008 Paris (FR)
(72) Inventor: Van Broeck, Sigurd, 2980 Zoersel (BE)
(74) Representative: Narmon, Gisèle Marie Thérèse

(57) **Abstract**

The invention concerns a method of handling an XML message between a first XML message endpoint (101) and a second XML message endpoint (104). According to the invention, the XML message is validated and/or logged in at least one intermediate network or intermediate network segment (102, 103) in between the first and second XML message endpoints (101, 104).

## Description

### Field of the Invention

The present invention generally relates to XML (Extended Markup Language) based messaging in a Service Oriented Architecture (SOA). Web services are deployed widely across the Internet or other communication networks such as wireline or wireless telecom networks, private enterprise networks, home networks, etc. The web service endpoints, i.e. the web service requester (or client) and web service provider (or server) usually reside in distant systems such as a mobile phone, a personal digital assistant or PDA, a personal computer or PC, a set-top box or STB, an application server, etc.

End-to-end messaging between distant service endpoints (i.e. the web service client and server) with one or more third party intermediates in between is possible through the exchange of XML messages. The intermediates are networks or network segments under control of one or several operators that act as independent party/parties to provide connectivity between two or more business partners or end users that control the XML endpoints. Examples of end-to-end messaging between web service endpoints or peers in a distributed environment are request-response messages such as database queries (e.g. an SQL query to a database server, the response being an XML document, or a database query exchanged via SOAP through the use of XQuery, SPARQL and or other XML languages for database queries, the response being an XML document), interactive information retrieval (e.g. a web service that returns the current weather information and/or weather forecast in return for a postal zip code submitted by the requester, a web service that returns the current stock trade price in return for a stock symbol), placing an order in an online shop, e-mail confirmation mechanisms (e.g. after successful registration, the server may ask a web service to send a confirmation e-mail to the user that has successfully registered), signing-in between server systems (e.g. a web service returns a user ID indicating if a user is authorized to access certain website resources), one-way messaging (e.g. heartbeat messaging, an event of a networked thermometer, a late and numbered asynchronous response), request-responses or any other kind of message exchange pattern (MEP). It is noted that in the example where an SQL query is sent, an adapter at the requester side may transform the SQL query into an XML based query to send it as such to the intermediate(s).

### Background of the Invention

SOAP (Simple Object Access Protocol) is an XML based protocol that defines the exchange of structured messages between peers (processes, service endpoints) in a distributed environment. The industry at large has adopted SOAP as the unified application-level XML messaging infrastructure for distributed computing. SOAP is thus widely used for inter-process communication in computer networks where the distant SOAP endpoints may run different operating systems. SOAP has been adopted by the World Wide Web Consortium (W3C) and version 1.2 of this protocol is described in the W3C Recommendation of 24 June 2003 that can be retrieved from the Internet via the following URL:
http://www.w3.org/TR/soap12-part0/
A SOAP message is an XML document that consists of a mandatory SOAP envelope with infrastructure-specific information expressing what is in the message and how to process it, an optional SOAP header to add features such as authentication, and a mandatory SOAP body that contains functional, application-specific information for the recipient. Apart from some basic message exchange patterns like SOAP Request-response and SOAP Response, the SOAP standard does not define any more advanced semantics like an order of operations or process related order wherein SOAP messages have to be communicated.

Every SOAP message originated by a service endpoint can be described in a service contract which defines in detail the structure and contents of the SOAP message: source, destination, parameter values, encryption type, etc. Part of the service contract, such as the interfaces, endpoint or identification of the destination for partners, types of data contained in the messages, properties like environment variables, features like reliability, security, etc. can be described in a WSDL (Web Services Description Language) document. The core language of the finalized WSDL Specification, version 2.0, can be found at URL:
http://www.w3.org/TR/wsdl20/
Such WSDL document can be complemented with other XML information e.g. to define the destination for the service, black or white lists of respectively untrusted and trusted message sources and destinations, etc. in order to establish the complete service contract. The service contract may further be extended with semantics, i.e. a process description like a mandatory order or sequence to be respected by the SOAP message exchanging endpoints, mutual dependencies between operations, etc. For instance, a semantic rule might be that SOAP message 1 originating from service endpoint A must be followed by SOAP message 2 originating from service endpoint B. Such semantics can be described in a WSBPEL (Web Services Business Process Execution Language) document. The WSBPEL draft specification, version 2.0 can be retrieved via the following URL:
http://www.oasis-open.org/committees/download.php/16024/wsbpel-specification-draft-Dec-22-2005.htm
The combined WSDL, XML and WSBPEL documents can be regarded as the service contract. Competing or extending specifications may be used, such as for instance the OWL-S (Web Ontology Web Language Service) described in the white paper that can be found at Internet URL:
http://www.daml.org/services/owl-s/1.0/owl-s.pdf

Many errors may interrupt the message exchange process between distant service endpoints: messages may be delayed, lost, duplicated, reordered, parameter values may be corrupted, source and destination addresses may be invalid or listed on a black list, the prescribed message sequence may not be respected, etc.

End-to-end reliable messaging between web service endpoints based on examination of the message exchange in the service endpoints themselves is described in a white paper from authors S. Cohen, A. Geller, C. Kaler, D. Langworthy and R. Limprecht entitled "Reliable Messaging in a Service Oriented Architecture". This paper dated 9 March 2004 can be extracted from the Internet via the following URL: http://msdn.microsoft.com/library/default.asp?url=/library/en-us/dnglobspec/html/ws-rm-soa.asp The mechanisms suggested for reliable message exchange suggested therein comprise message sequence creation and verification in the source or destination through unique identifiers for each sequence and unique message numbering within a sequence, acknowledgement of the receipt of messages by the destination automatically or on explicit request of the source, and retransmission of unacknowledged messages by the source.

In addition, messages may be validated based on the information in the WSDL and/or policies service contract. Xtradyne's WS-DBC (Web Services Domain Boundary Controller) advertised at URL: http://www.xtradyne.com/products/ws-dbc/ws-dbc.htm for instance provides a XML/SOAP message firewall where a virtual service endpoint inspects the SOAP messages and blocks SOAP messages that are incorrect, malformed or that contain malicious content.

Another tool, the DataPower XS40 XML Security Gateway is a dedicated enterprise network device that can be installed and addressed by XML aware service endpoints for protecting and validating XML/SOAP messaging. The DataPower XS40 protects XML messages through digital signatures, secure timestamps and XML encryption. The stream of XML/SOAP/Web Service messages is monitored based on source location, destination location, time to process, or other defined parameters in order to detect changes in service or abnormalities. XML/SOAP messages that are not validated, are captured, logged and alerted so assigned personnel for manual intervention and analysis. More details on the DataPower XS40 are described in the news report published at the following Internet URL:
http://www.gridtoday.com/03/0825/101861.html
Logging of all or part of the XML/SOAP traffic between two or more parties in a business relationship may be required for administrative, commercial or legal purposes. One reason to perform message logging is non-repudiation, i.e. guaranteeing that a message has been exchanged to avoid that a malicious sender can later disavow having created and sent a specific message. Non-repudiation involves message authentication, e.g. through digital signatures, to guarantee that a message is not modified on its route, and sender/recipient authentication, e.g. through passwords or public/private key based SSL (Secure Sockets Layer) authentication, to confirm the sender and recipient identity. These aspects of non-repudiation are introduced in the article "SOAP Security Extensions: Digital Signature" from author Satoshi Hada, publicly accessible via URL: http://www-128.ibm.com/developerworks/library/ws-soapsec/ In addition, non-repudiation requires logging of the exchanged messages. To achieve this functionality, the business partners can implement themselves message logging, e.g. on the server side through installation of the IONA Administrator software that redirects SOAP messages to a specified file. An image of this software package can be found at the URL: http://www.iona.com/support/docs/e2a/asp/5.1/xmlbus/users_ guide/ManagingWS22.html

In the prior art solutions, the end user is responsible for validating the messages against the service contract or needs to locate a dedicated virtual service endpoint that can provide validation of the service contract on his behalf. Similarly, it is the end user's responsibility to organise logging of the messages for commercial or legal purposes such as non-repudiation. This often requires installation of complex software on an end user device able to cope with all expected and unexpected XML/SOAP formats.

Also the logging of messages, e.g. for non-repudiation purposes has to be taken care of by the end user. The logging and non-repudiation functionality is installed by the end user himself or the end user locates a dedicated service that can provide such functionality on his behalf.

It is an object of the current invention to overcome the above described shortcomings of the prior art. In particular, it is an object of the current invention to provide validation and logging of the message exchange between web service endpoints relieving the end user that controls these web service endpoints of the responsibility to either install and configure complex software tools that validate and/or log the messages or to otherwise locate dedicated services that provide this functionality on his behalf.

### Summary of the Invention

According to the invention, the above defined object is realized by a method of handling an Extensible Markup Language (XML) message between a first XML message endpoint and a second XML message endpoint wherein the XML message is validated in an intermediate network or intermediate network segment and/or the XML message or a portion thereof is logged in an intermediate network or intermediate network segment, as defined by claim 1.

Indeed, since XML messages between distant partners are generally passing via telecom networks operated by one or more telecom operator, these telecom networks are well positioned to provide validation and/or logging services. The telecom network or segments thereof in other words act as an independent, trusted party between two or more end users or business partners. The network or network segments thereto have to be treated as XML intermediates, such that they can take the role of validating and/or logging the XML messages on behalf of the end users. The validation and logging functionality according to the current invention becomes inherent part of the operator's network acting in its role of XML intermediate, which relieves the end user from the burden and responsibility to provide this functionality himself or to locate dedicated services that provide this functionality on his behalf.

It is noticed that intermediate network or intermediate network segment in the context of the current patent application covers any XML aware network node (router, switch, switchrouter, access node, access server, application server, etc.), combination of an XML network node and its management platform, or combination of plural XML aware network nodes and their management platform. The intermediate network or intermediate network segment can be recognized by the end uses as an intermediate XML node and can be uniquely identified by the end users. It is also remarked that a single administrative domain (e.g. the Belgacom communication network) can consist of several network segments (e.g. the www.belgacom.be/government network segment, the www.belgacom.be/trade network segment, ...) in overlay of one another, meaning that a single network element may form part of multiple network segments, each network segment having its own specific policies.

The current invention further relates to a network element as defined in claim 10, an intermediate element as defined by claim 11 and an intermediate element as defined by claim 12, all respectively able to validate and/or log the XML message exchange between partners on behalf of one or more of the partners as part of the method of handling XML messages according to the invention.

An optional feature of the method according to the present invention, defined by claim 2, is that the XML message may be a structured message with at least a header portion and a body portion.

In such implementations where the XML message is structured, the header portion of the structured message may be extended with various entries assisting in implementing the current invention. If the XML message is not structured, other mechanisms may have to be looked after for indicating what is exactly expected from the intermediate network or intermediate network segment: logging or validating or both, which messages to log and what portions of such messages to log, which parameters to validate, etc.

A further optional feature of the method according to the present invention, defined by claim 3 is that the XML message may be a Simple Object Access Protocol (SOAP) message.

Indeed, although efforts are ongoing to create standards for reliable SOAP messaging, SOAP transactions, etc., partners involved in a business relationship can still deny having sent or received certain SOAP messages and there is no mechanism to indicate to the network acting as SOAP intermediary that logging or validation is required. According to the present invention, one or more partners may require that certain SOAP messages get logged and/or validated through an intermediary, trusted element, and the request for logging/validation as well as an indication that logging/validation has been performed, may be embedded in the SOAP header.

Also optionally, the XML message may contain in its header portion an indication that validation and/or logging of the XML message or a portion thereof is requested. This optional feature is defined by claim 4.

Thus, an entry requesting validation and/or logging of the XML message may be included in or added as an extension to the header of the XML message. Possibly, the header may be modified by the intermediary element performing the validation and/or logging such that the message arriving at the destination endpoint will contain sufficient information to allow the receiving endpoint to verify that validation/logging was performed and who performed it.

Further, and still optionally to the method according to the present invention, the XML message may contain in its header portion an indication that validation of the XML message in at least one of the intermediate networks or intermediate network segments is requested and/or has been performed. This optional feature is defined by claim 5.

Thus, the source of an XML message may request validation of that XML message via a particular field of the message header, and XML intermediaries that perform the validation may indicate in the message header that the validation has been performed. In a request-response scenario, the validation request in the header may require validation of the request message (e.g. to block spyware messages) and/or validation of the response message. The latter could be more challenging because the XML intermediate will need to keep track of the XML request optionally in non-volatile memory, and will have to analyze the service contract in order to be able to relate the XML response to the XML request.

Yet another option of the current invention, defined by claim 6, is that the XML message may contain in its header portion an indication that logging of the XML message or a portion thereof in at least one of the intermediate networks or intermediate network segments is requested and/or has been performed.

One or more intermediate elements in the network can then log all XML messages extended with this logging indicator and subsequently allow full access to this information by one or more parties. The intermediate elements that log the XML messages may modify the header of these messages to indicate that logging has been performed.

Another optional aspect of the method according to the present invention is that the XML message further may contain in its header portion an indication that logging of the XML message or a portion thereof in at least one of the intermediate networks or intermediate network segments is requested for repudiation purposes. This feature is defined by claim 7.

Thus, the entry in the header portion of an XML message may not only request logging, but also specify the intent of the logging, like for instance non-repudiation.

Alternatively, the logging details can be provided as a separate document that defines the role of the network or network segment acting as intermediary in the logging method according to the present invention.

The header of the XML messages in other words may not only be extended with entries indicating that logging and/or validating is requested, but may also contain additional specifications for the logging and validation, such as the time logging records have to be kept. Alternatively, an extension to the service contract for use by the intermediates may contain the logging specifics for one, more or all of the messages.

In a possible implementation of the method according to the present invention, at least one of the intermediate networks or intermediate network segments may be configured to validate and/or log certain or all XML messages, as defined by claim 8.

Hence, as an alternative to indicating in the header of the messages of logging and/or validation is requested, the operator(s) may configure intermediate elements according to the present invention to validate and/or log each XML message.

Alternatively, at least one of the intermediate networks or intermediate network segments may be configured to validate and/or log XML messages in accordance with legacy requirements, as defined by claim 9.

Indeed, instead of logging and/or validating all messages, intermediate elements may be configured to validate or log certain XML messages to accord with legacy requirements.

As already mentioned in some paragraphs above, an alternative to indicating in the header portion of XML messages if logging and/or validating is requested, and to - of intermediate elements as, the logging and/or validating of XML messages may be specified in a WSDL document, or XML extensions that complement the WSDL document to establish the service contract.

### Brief Description of the Drawings

Fig. 1 illustrates an embodiment of the method according to the present invention, wherein a SOAP request message and SOAP response message are validated in intermediate network segments; and
Fig. 2 illustrates an embodiment of the method according to the present invention, wherein a SOAP message is logged in intermediate network segments.

### Detailed Description of Embodiment(s)

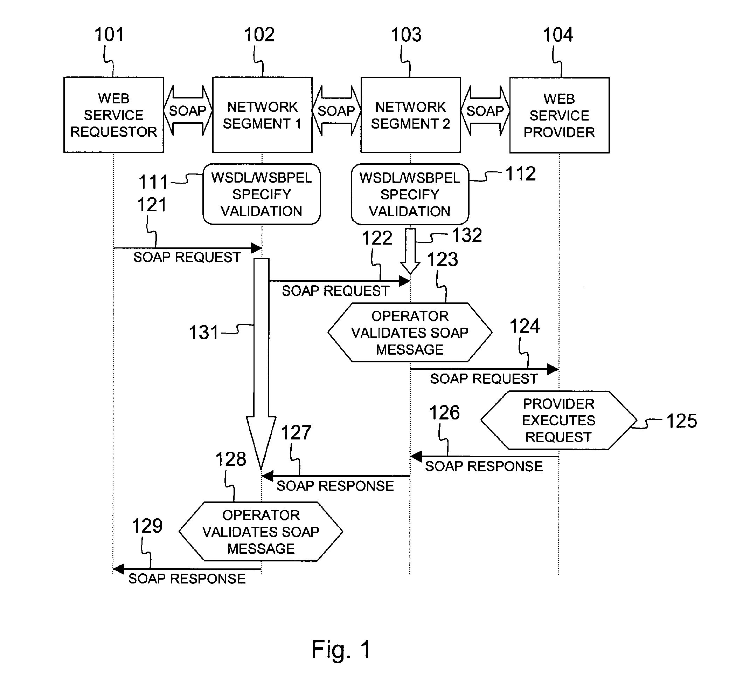

Fig. 1 visualizes the functional scenario followed when a web service requestor 101 requests validation of a SOAP request message 121 sent towards a web service provider 104. In between the web service requestor 101 and web service provider 104, two intermediate network segments, 102 and 103, are drawn. These intermediate network segments may for instance be controlled by different operators. In the example illustrated by Fig. 1, the validation specifics are retrieved from the service contract. For instance, the WSDL/WSBPEL description 112 of the web service provider 104 specifies validation of SOAP messages sent towards the web service provider 104, and the validation is assumed to be performed in the network segment that acts as SOAP intermediate and that is most adjacent to the destined web service provider 104, i.e. network segment 2 or 103 for the SOAP messages sent from the web service requestor 101 to the web service provider 104. This is illustrated in Fig. 1 for SOAP request 121 that is forwarded through the first intermediate network segment 102 to become SOAP request message 122, the latter being validated in the second intermediate network segment 103 as is indicated by step 123 in the functional diagram. An extension is added to the header or service packaging of SOAP request message 121 for use by the SOAP intermediates such as network segment 102 and network segment 103. This extension consists of an entry requesting validation of the related incoming response message (i.e. message 127) for message 121, and an entry specifying the level of validation (e.g. message, operation, interface, service, process, or other basis). Upon receipt of the message 121 by the intermediate 102, the latter one saves the state information as indicated by arrow 131 such that it can validate the SOAP response message 127 later on. On behalf of the destined web service provider 104, a dedicated SOAP intermediate like network segment 103 can take the role of validating the SOAP message 122 originating from the web service requestor 101 against the service contract 112 that is supposed to be with the operator of the second intermediate network segment 103. The validated SOAP request message 124 is then forwarded to the web service provider 104 which executes the request, as is indicated by step 125 in the functional diagram. SOAP request message 124 may contain information indicative for the fact that it has been validated by the second intermediate network segment 103, such that the web service provider 104 can verify that validation was done and by whom it was done. Similarly, the WSDL/WSBPEL description or service contract 111 of the web service requestor 101 specifies validation of SOAP messages destined to the web service requestor 101, and the validation is assumed to be performed in the network or network segment that acts as SOAP intermediate and that is most adjacent to the destined web service requestor 101, i.e. network segment 1 or 102 for the SOAP messages sent from the web service provider 104 to the web service requestor 101. This is illustrated in Fig. 1 for SOAP response message 126 sent back by the web service provider 104 to the web service requestor 101 in response to the SOAP request message 124. The SOAP response message 126 may contain an indication that a next message in response to 126, should be validated. In such case, the intermediate 103 closest to web service provider 104 will keep state upon receipt of message 126. The SOAP response message 126 is forwarded by the second intermediate network segment 103 as SOAP response message 127, the latter being validated by the first intermediate network segment 102 against the service contract 111 of the web service requestor 101, as is indicated by step 128 of the functional diagram. The validated SOAP message 129, eventually containing information on the fact that it has been validated in the first intermediate network segment 102, is forwarded to the web service requestor 101, hence terminating the request-response scenario illustrated by Fig. 1.

As is indicated by arrow 131, the SOAP response message 127 is validated against the service contract 111 of the web service requestor 101. Similarly, the arrow 132 indicates that the SOAP request message 122 was validated against the service contract 112 of the web service provider 104 in the second intermediate network segment 103.

The web service requestor 101 and web service provider 104 in Fig. 1 may reside on any device including a mobile phone, a Personal Digital Assistant (PDA), a Personal Computer (PC), an Application Server (AS), a Set Top Box (STB), etc., connected either directly or via a private network to the communication network where the segments 102 and 103 form part of, e.g. the Internet.

It is noticed that in the above example implementation of the invention an extension to the service contract (based on WSDL, WSBPEL, or alternatives) allows to define validation specifics in the service contract for use by telecommunication systems (or other SOAP intermediates) like network segments 102 and 103. Further, not shown in Fig. 1, an extension to the service registry (based on UDDI, or alternatives) may allow defining validation specifics for one, more or all of the service contracts supported by a particular device. Advantageously, the exact syntax of the extensions to the service packaging and contract and the exact syntax of related fault message(s) will become standardized by a consortium like e.g. W3C, ETSI or ITU-T. Furthermore, while validation of incoming SOAP messages will most probably be performed in the most adjacent intermediate network or intermediate network segment, the current invention is obviously not restricted by the location of the intermediate element where validation is performed.

It is further noticed that the body part of the SOAP messages, 121, 122, 124, 126, 127 and 128 in Fig. 1, or part thereof may be encrypted such that only the end destination can decrypt it (end-to-end encryption). In such case, only the non-encrypted part of the SOAP messages can be validated.

Validation of all or part of the SOAP traffic as illustrated by Fig. 1, relieves the end-user device from performing this functionality. Additionally, the software on the end-user device can be simplified since it does not have to cope with unexpected SOAP formats.

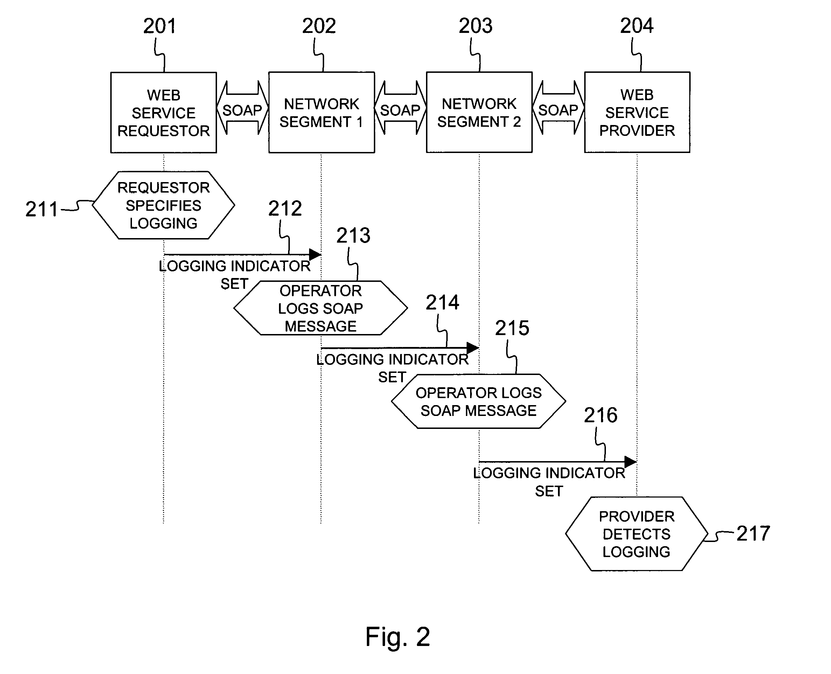

Fig. 2 visualizes within the communication network of Fig. 1 the functional scenario followed when web service requestor 201 requests logging of a SOAP message sent towards web service provider 204. The path between web service requestor 201 and web service provider 204 contains two intermediate network segments, 202 and 203, which may be under control of different network operators. In this example, the logging is performed in both intermediate network segments, 202 and 203, that are both acting as SOAP intermediates.

The SOAP message header is extended with an indicator to request logging of SOAP messages with the optional intent to furnish non-repudiation in one, more or all of the SOAP intermediates (representing the network or network segments). The Web service provider 201 defines the logging specifics in a first step referenced by 211 in Fig. 2. In the SOAP message 212 sent by the web service requestor 201, the logging indicator is set. As a result, the first intermediate network segment 202 logs the received SOAP message 212 (or portions thereof as defined in the logging specification) in step 213 and forwards the SOAP message as message 214 wherein the logging indicator is also set. The second intermediate network segment 203 also logs the received SOAP message 215 and forwards the SOAP message as message 216 wherein the logging indicator is also set. At last, the SOAP message 216 is received by the web service provider 204, who may be able to verify that the message was logged and by whom thanks to information contained in the message by the intermediate network segments 202 and 203.

This invention as implemented here above requires an extension to the service contract (based on WSDL, WSBPEL, or an alternative) that enables the definition of the logging and repudiation specifics for one, more or all of the messages in the service contract. Advantageously, the exact syntax of the extensions to the service packaging and contract and the exact syntax of related fault message(s) will become standardized by a consortium like e.g. W3C, ETSI or ITU-T.

The above mechanisms for logging and validating SOAP messages may be combined and requested for a single SOAP message that is sent from a web service requestor to a web service provider. The logging and/or validation service may be provided by different operators where each operator is responsible for his part of the logging and/or validation, meaning that each operator will also generate its own billing.

It is noticed that validation and/or logging can also be configured in the SOAP intermediates where the SOAP message passes on a per-SOAP-message basis. In such case, there is no immediate need for a dedicated indication inside the service description (WSDL, WSBPEL, or other).

It is remarked that since validation and/or logging is most probably not offered for free, such paid service will have to be enabled first on a per-customer basis. Different fee structures can be provided based on the required validation level (message, operation, interface, process, other) and/or logging level. Alternatively, all messages can be logged and/or validated for a limited amount of time and charging can subsequently be applied when the records are consulted or legal documents are generated from these records.

Another remark is that the validation and/or logging method described above is valid also for other networks like private or home networks. For instance, a home or enterprise network may log all messages relating to the home automation system in order to create a backlog of all changes. In order to relief the end user of this burden, the private/home network can be controlled/maintained by the operator.

Yet another remark is that the operator can provide the validation/logging function according to the present invention also when a partner has moved (e.g. the web service requestor has taken another physical location). This is an additional advantage of the current invention.

Another advantage related to the current invention is that the user or software upon user input can decide at run-time which message he/she wants to have logged by the operator. Indeed, when for instance a user orders some goods from a new supplier, he/she may exceptionally desire to log that first message (first order).

In case one or more third party SOAP intermediates are used, validation and/or logging may also be required for the SOAP messages entering and exiting such SOAP intermediates on behalf of the SOAP intermediates. Since such intermediates are at the same time both receiver and sender of SOAP messages, the mechanisms explained above are applicable also for these nodes.

Every SOAP message originated by a service should be described in the service contract. The contract defines in great detail the structure and contents of each SOAP message. Therefore, each SOAP message can be validated based on the information in the service contract.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A method of handling an Extensible Markup Language (XML) message between a first XML message endpoint (101; 201) and a second XML message endpoint (104; 204) in a communication network comprising at least said first XML message endpoint (101; 201), one or more intermediate networks or intermediate network segments (102, 103; 202, 203), and said second XML message endpoint (104; 204),
**CHARACTERIZED IN THAT** said XML message is validated in at least one of said intermediate networks or intermediate network segments (102, 103; 202, 203) and/or said XML message or a portion thereof is logged in at least one of said intermediate networks or intermediate network segments (102, 103; 202, 203).

2. A method according to claim 1,
**CHARACTERIZED IN THAT** said XML message is a structured message with at least a header portion and a body portion.

3. A method according to claim 2,
**CHARACTERIZED IN THAT** said XML message is a Simple Object Access Protocol (SOAP) message.

4. A method according to claim 2 or claim 3,
**CHARACTERIZED IN THAT** said XML message contains in said header portion an indication that validation and/or logging of said XML message or a portion thereof is requested.

5. A method according to claim 4,
**CHARACTERIZED IN THAT** said XML message contains in said header portion an indication that validation of said XML message in at least one of said intermediate networks or intermediate network segments is requested and/or has been performed.

6. A method according to claim 4,
**CHARACTERIZED IN THAT** said XML message contains in said header portion an indication that logging of said XML message or a portion thereof in at least one of said intermediate networks or intermediate network segments (102, 103; 202, 203) is requested and/or has been performed.

7. A method according to claim 6,
**CHARACTERIZED IN THAT** said XML message further contains in said header portion an indication that logging of said XML message or a portion thereof in at least one of said intermediate networks or intermediate network segments (102, 103; 202, 203) is requested for repudiation purposes.

8. A method according to claim 1,
**CHARACTERIZED IN THAT** at least one of said intermediate networks or intermediate network segments (102, 103; 202, 203) is configured to validate and/or log certain or all XML messages.

9. A method according to claim 1,
**CHARACTERIZED IN THAT** at least one of said intermediate networks or intermediate network segments (102, 103; 202, 203) is configured to validate and/or log XML messages in accordance with legacy requirements.

10. A network element in an intermediate network or intermediate network segment (102, 103; 202, 203) of a communication network comprising at least a first XML message endpoint (101; 201), said intermediate network or intermediate network segment (102, 103; 202, 203), and a second XML message endpoint (104; 204),
**CHARACTERIZED IN THAT** said network element is adapted to validate and/or to log an Extensible Markup Language (XML) message transferred between said first XML message endpoint (101; 201) and said second XML message endpoint (104; 204).

11. An intermediate element adapted to be attached to or integrated in an intermediate network or intermediate network segment (102, 103; 202, 203) of a communication network comprising at least a first XML message endpoint (101; 201), said intermediate network or intermediate network segment (102, 103; 202, 203), said intermediate element and a second XML message endpoint (104; 204),
**CHARACTERIZED IN THAT** said intermediate element is adapted to validate and/or to log an Extensible Markup Language (XML) message transferred between said first XML message endpoint (101; 201) and said second XML message endpoint (104; 204) via said intermediate element.

12. An intermediate element adapted to be attached to or integrated in a communication network comprising at least a first XML message endpoint (101; 201), said intermediate element and a second XML message endpoint (104; 204),
**CHARACTERIZED IN THAT** said intermediate element is adapted to validate and/or to log an Extensible Markup Language (XML) message transferred between said first XML message endpoint (101; 201) and said second XML message endpoint (104; 204) via said intermediate element.
